# EUROPÄISCHE PATENTSCHRIFT

(11) **EP 0 918 234 B1**
(45) Veröffentlichungstag und Bekanntmachung des Hinweises auf die Patenterteilung: **17.04.2002**
(21) Anmeldenummer: 97120113.2
(22) Anmeldetag: 17.11.1997
(51) Int. Cl.: G02B 1/10, C09D 183/04

(54) **Verbundmaterial, insbesondere für Reflektoren**
Composite, in particular for reflectors
Matériau composite, en particulier pour réflecteurs

(43) Veröffentlichungstag der Anmeldung: 26.05.1999
(73) Patentinhaber: Alanod Aluminium-Veredlung GmbH & Co., 58256 Ennepetal (DE); Alusuisse Singen GmbH, 78224 Singen/Htwl. (DE)
(72) Erfinder: Reichert, Werner Dipl.-Ing., 42287 Wuppertal (DE); Gänz, Klaus Dipl.-Ing., 42389 Wuppertal (DE)
(74) Vertreter: Patentanwälte Dr. Solf & Zapf

(56) Entgegenhaltungen:
- EP-A- 0 331 201
- EP-A- 0 519 784
- EP-A- 0 573 163
- US-A- 5 527 562

## Beschreibung

Die vorliegende Erfindung betrifft ein reflektierendes Verbundmaterial, insbesondere für Reflektoren, mit einem bandförmigen metallischen Träger, einer Zwischenschicht und mit einem auf die Zwischenschicht aufgebrachten, reflektierenden optischen Mehrschichtsystem.

Zur Charakterisierung der Reflexionseigenschaften eines derartigen Verbundmaterials mißt man den spektralen Grad der Gesamtreflexion und den der diffusen Reflexion (DIN 5036). An die lichttechnischen Eigenschaften von Reflektoren werden dabei unterschiedliche Ansprüche gestellt. In vielen Fällen strebt man ein Verbundmaterial mit hohem Gesamtreflexionsgrad, d.h. mit geringen Reflexionsverlusten, an. Wenn dabei zusätzlich ein Spiegelcharakter, d.h eine geringe Streuung des Lichtes an der Reflektoroberfläche bzw. ein geringer Grad der diffusen Reflexion gefordert ist, ist die Herstellung eines solchen Verbundmaterials fertigungstechnisch sehr aufwendig. In einigen Fällen ist auch ein höherer Grad der diffusen Reflexion, unter Umständen im Hinblick auf den Gesamtreflexionsgrad sogar ein Absorptionsverhalten, erwünscht. In einigen Spezialanwendungen kann die zu reflektierende Wellenlänge der elektromagnetischen Strahlung im UV- oder im IR-Bereich liegen.

Als Basismaterial für Reflektoren mit hohem Gesamtreflexionsgrad und niedrigem diffusen Anteil wird weithin gewalztes Aluminium mit einer Mindestreinheit von 99,8 % verwendet, für das, da das Rohaluminium eine empfindliche Oberfläche hat, zum Erhalt der Gebrauchsfähigkeit ein Zwischenschicht zum Schutz vor mechanischen und chemischen Einflüssen aufgebracht werden muß. Eine solche schützende Zwischenschicht entsteht in einem naßchemischen Prozeß, der zusammenfassend als Eloxieren bezeichnet wird und ein elektrolytisches Glänzen sowie eine anodische Oxydation umfaßt. Durch Änderungen der Reinheit und/oder der Rauhtiefe kann dabei Einfluß auf die Höhe der Gesamtreflexion genommen werden, während durch gezielte Veränderungen der Walzstruktur der Grad der diffusen Reflexion beeinflußt werden kann. Die Gesamtreflexion derartiger Verbundmaterialien liegt im Wellenlängenbereich des sichtbaren Lichtes (380 bis 780 nm) bei Werten von 83 % bis 87 %. Das Erreichen eines niedrigen diffusen Anteils der Reflexion, insbesondere unterhalb eines Wertes von 4 %, erfordert einen erheblichen verfahrenstechnischen Aufwand, vornehmlich einen hohen Aufwand bei der Walztechnik, sowie eine hohe Reinheit des eingesetzten Materials, wodurch hohe Kosten entstehen. Trotz dieser Nachteile ist diese Art von bandförmigem Halbzeug weltweit als Standardprodukt für die Beleuchtungsindustrie etabliert.

Weiterhin ist es bekannt, unter Verwendung von weniger hochwertigem bandförmigen Aluminium-Trägermaterial auf den Träger eine Eloxal-Schicht, aufzubringen, die aus ca. 1 bis 3 µm dickem Al₂O₃ besteht und auf die anschließend eine optisches Mehrschichtsystem aufgebracht wird. Durch die in ihrer Dicke reduzierte Eloxalschicht wird erreicht, daß die Oberfläche eine genügend geringe Rauhigkeit und eine ausreichende Härte aufweist sowie defektfrei ausgebildet ist. Auf diese Eloxalschicht wird eine hochreflektierende Reinstaluminium-Schicht abgeschieden. Sie ist optisch dicht, etwa 50 bis 80 nm dick und weist im sichtbaren Bereich des Lichtes eine Gesamtreflexion von mehr als 91 % auf. Auf diese Reflexionsschicht können noch weitere reflexionserhöhende Schichten aufgebracht werden. Beispielsweise erzielt man durch eine nachfolgende, in der Zeitschrift "Metalloberfläche" 50 (1996) 10) beschriebene, kontinuierliche Bandbeschichtung eine Verbesserung des optischen Wirkungsgrades von solchen Aluminiumbändern bis zu einem Lichtgesamtreflexionsgrad von ca. 95 %. Der diffuse Lichtreflexionsgrad bei Material mit Spiegelcharakter wird dabei jedoch nur unwesentlich verbessert. Die optisch wirksame Oberfläche hat eine gute mechanische Belastbarkeit und eine ausreichende chemische Beständigkeit für den Einsatz als Reflektormaterial. Jedoch ist die als Glättungsschicht dienende Eloxal-Zwischenschicht relativ spröde, so daß bei extremen mechanischen Verformungsvorängen eine Rißbildungsgefahr besteht.

Ein wesentlicher Nachteil der beiden vorbeschriebenen bekannten optisch wirkenden Verbundmaterialien besteht darin, daß sie auf Aluminium als Trägermaterial beschränkt sind. Daran gekoppelt sind aufwendige, zum Teil umweltbelastende, notwendige Verfahrensschritte bei der Herstellung wie das naßchemische Glänzen, das Anodisieren und gegebenenfalls die Vakumbeschichtung bzw. die Notwendigkeit, hochreines, speziell gewalztes und damit teures Ausgangsmaterial zu verwenden.

Aus der US-PS 5 527 562 ist ein Verbundmaterial der eingangs beschriebenen Art bekannt, bei dem als Zwischenschicht ein einebnender Auftrag auf einen Aluminiumträger vorgesehen ist, der als Substrat für eine nachfolgende Vakuumbeschichtung mit einem optischen reflektierenden Schichtsystem dient. Bei diesem Auftrag handelt es sich um ein siliciumorganisches Sol, welches auf geeignet vorbehandeltes Aluminium aufgetragen wird. Das spezielle Sol soll eine gute Einebnung der Aluminiumbandoberfläche und hohe Gesamtreflexionswerte nach der Beschichtung im Vakuum durch Sputtern von Al, SiO₂, TiO₂ bewirken. Nachteil ist hierbei, daß die Verwendung einer sehr speziellen Rezeptur für die Sol-Schicht ein hohen verfahrenstechnischen Aufwand erfordert.

Weiterhin ist es bekannt, daß gekrümmte starre Reflektorkörper (z.B. für Scheinwerfer) mit einer einebnenden Lackschicht versehen werden, auf die anschließend im Vakuum ein einschichtiger Reflexionsauftrag aus Aluminium aufgebracht wird, welcher wiederum mit einer Schutzschicht versehen wird. Nachteilig ist dabei, daß der Gesamtreflexionsgrad nicht über den der Aluminiumschicht von ca. 90 % hinausgeht und daß die so erhaltene Oberfläche eine ungenügende mechanische Beständigkeit aufweist. Die Oberfläche besitzt insbesondere gegenüber Verformungsvorgängen eine so unzureichende Belastbarkeit, daß eine Weiterverarbeitung unter normalen industriellen Bedingungen nicht möglich wäre.

Der vorliegenden Erfindung liegt die Aufgabe zugrunde, ein Verbundmaterial, insbesondere für Reflektoren, der eingangs beschriebenen Art zu schaffen, mit dem in wenig aufwendiger und damit kostensparender Weise je nach Bedarf ein beliebiger Gesamtreflexionsgrad, insbesondere auch Werte über 95 %, und ein beliebiger Anteil der diffusen Reflektion, insbesondere auch Werte unter 4 % (nach DIN 5036) erreicht werden können und das eine hohe mechanische und chemische Beständigkeit aufweist. Das Verbundmaterial soll dabei nicht auf einen Träger aus Aluminium beschränkt sein und eine hohe Verformbarkeit aufweisen.

Erfindungsgemäß wird dies dadurch erreicht, daß auf dem optischen Mehrschichtsystem eine nichtmetallische Schutzschicht aufgebracht ist, die aus einem derart absorptionsarmen Material besteht, daß sie einen nach DIN 5036 bestimmten Licht-Gesamtreflexionsgrad von mindestens 95 % zuläßt, und die eine Dicke von 5 bis 20 nm, vorzugsweise von 5 bis 10 nm, aufweist und daß die Zwischenschicht eine Dicke im Bereich von etwa 2 bis 20 µm aufweist und aus einem Lack besteht, der ein auf der Basis von einem oder mehreren Monomeren hergestelltes Polykondensat, ein Polyaddukt oder ein, insbesondere durch eine radikalische Polymerisation hergestelltes, Polymerisat ist.

Die Schutzschicht kann dabei vorzugsweise eine Sputterschicht, insbesondere eine durch Reaktivsputtern erzeugt Schicht, eine CVD- oder PECVD-Schicht oder durch Verdampfen, insbesondere durch Elektronenbombardement oder aus thermischen Quellen, erzeugt sein. Vornehmlich kann die Schutzschicht aus einem niedrigberechenden Material, wie bespielsweise SiO₂, bestehen.

Durch die Erfindung eröffnen sich völlig neue technische und wirtschaftliche Möglichkeiten zur Herstellung von Reflektorverbundmaterialien. So kann nämlich ohne Minderung der mechanischen Beständigkeit des Verbundmaterials für die Zwischenschicht die Lackschicht mit einer an die Rauhigkeit des Trägers angepaßten Dicke aufgetragen werden. Ganz gleich auf welcher Basis die Lackmischung hergestellt ist, ist es möglich, durch eine geeignete Wahl der Mischung und/oder des Auftragsverfahrens und/oder der Aushärtungsparameter eine geringe oder möglichst vollständige Einebnung der Trägeroberfläche einzustellen, so daß eine ebene Oberfläche mit minimaler Rauhtiefe oder eine solche mit einer gewollten welligen bzw. rauhen Struktur entsteht. Dem Lack kommt damit - hinsichtlich seines Einflusses auf die Reflexion - die gleiche Bedeutung zu, wie den Walzoberflächen der bekannten Aluminiumbänder.

Eine wesentliche Rolle spielt dabei die Schutzschicht. Nach dem bekannten Wissensstand in der optischen Physik verschlechtert jede weitere Schicht, die auf ein optisches Mehrschichtsystem aufgetragen wird, das z.B. aus einer metallischen Reflexionsschicht und zwei darüberliegenden Interferenzschichten besteht, die optischen Kennwerte des Schichtsystems beträchtlich. Überraschenderweise gelingt es erfindungsgemäß - im Gegensatz zu diesem allgemein anerkannten Wissensstand - nicht nur die Werte für die mechanische Belastbarkeit (DIN 58165 T5) entscheidend zu steigern, sondern auch den Reflexionsgrad um ca. 1 % - Punkt zu erhöhen.

Ein weiterer wesentlicher Aspekt der Erfindung ist die Möglichkeit der Verwendung eines preiswerten metallischen Trägers, der aus einfachem, technisch gewalzten Aluminium bestehen kann. Erfindungsgemäß ist es jedoch auch möglich, andere metallische Trägermaterialien, wie Magnesium, Kupfer, Titan, Molybdän, Tantal oder Stahl, wie beispielsweise Edelstahl, oder aus Legierungen mit diesen Stoffen, wie beispielsweise Messing, zu verwenden, wodurch sich einerseits die mechanischen Eigenschaften des Verbundmaterials zu höheren Festigkeitswerten verbessern lassen, andererseits aber auch weniger kostenintensive Werkstoffe als Aluminium eingesetzt werden können. Die bei diesen Materialien bestehende Oberflächenrauhigkeit spielt keine Rolle mehr, da die Oberflächenstruktur des erfindungsgemäßen Verbundmaterials in der Hauptsache durch die Zwischenschicht bestimmt wird, wobei die Dicke der Zwischenschicht an die Rauhigkeit des Trägermaterials angepaßt werden kann.

Vorteilhafterweise kann der gesamte Herstellungsprozeß des erfindungsgemäßen Verbundmaterials in einem kontinuierlichen Prozeß erfolgen: Das optische Mehrschichtsystem und die Schutzschicht können im kontinuierlichen Vakuum-Bandbeschichtungsprozeß auf der Zwischenschicht aufgebracht werden, während für die Zwischenschicht insbesondere solche Rezepturen eingesetzt werden können, die im Coil-Coating-Verfahren aufgebracht, getrocknet und gegebenenfalls strukturiert werden können. Bei diesen Rezepturen handelt es sich insbesondere um bei Temperaturen von bis zu etwa 250 °C härtbare Einbrennlacke mit durch organische oder anorganische Lösungsmittel voreinstellbarer Zähigkeit auf der Basis von Acryl-, Epoxid-, Phenol-, Melamin-, Harnstoff- oder Polyurethanharzen. Die Aushärtung erfolgt dabei vorwiegend infolge einer Vernetzungsreaktion durch Aktivierung der in den Monomeren vorhandenen Doppelbindungen. Die gebildeten Lackschichten zeichnen sich durch eine hohe Kratzfestigkeit Dehnbarkeit und Unempfindlichkeit gegenüber korrosiven Einflüssen aus.

Vornehmlich sollten für die Strukurbildungschicht solche Lacke eingesetzt werden, die eine derartige Biegehaftung auf dem Träger aufweisen, daß beim Biegen eines Trägers mit einer Materialstärke von 0,4 mm um einen Dorn mit 2 mm Durchmesser bei Abzug eines vorher aufgeklebten mitgebogenen Klebestreifens vom Typ Scotch 670 CFM des Herstellers 3 M keine Delamination der Zwischenschicht auftritt.

Weiterhin ist es im Hinblick auf eine nach dem Aufbringen der Zwischenschicht erfolgende Vakuumbeschichtung vorteilhaft, einen Lack einzusetzen, der eine Glastemperatur von über 100 °C und eine Ausgasrate von weniger als 1 * 10⁻⁴ mbar l s⁻¹ m⁻² besitzt.

Weitere Vorteilhafte Ausführungen der Erfindung sind in den Unteransprüchen und in der nachfolgenden detaillierten Beschreibung enthalten. Anhand mehrerer durch die beiliegende Zeichnung veranschaulichter Ausführungsbeispiele wird die Erfindung näher erläutert. Es zeigen:
- Fig. 1: eine prinzipielle Schnittdarstellung durch ein erfindungsgemäßes Verbundmaterial, die charakteristisch ist für die ersten drei Ausführungsbeispiele,
- Fig. 2: eine prinzipielle Schnittdarstellung durch ein erfindungsgemäßes Verbundmaterial, die charakteristisch ist für das vierte Ausführungsbeispiel.

In den verschiedenen Figuren der Zeichnung sind gleiche Teile stets mit denselben Bezugszeichen versehen, so daß sie in der Regel auch jeweils nur einmal beschrieben werden.

In allen Ausführungsbeispielen besteht ein erfindungsgemäßes Verbundmaterial, insbesondere für Reflektoren, aus einem, insbesondere verformungsfähigen, bandförmigen metallischen Träger 1, einer Zwischenschicht 2, die für eine wenig aufwendige Einstellung einer hinsichtlich der Reflexionseigenschaften maßgebenden Oberflächenstruktur geeignet ist, einem auf die Zwischenschicht 2 aufgebrachten optischen Mehrschichtsystem 3 sowie einer auf dem optischen Mehrschichtsystem 3 aufgebrachten nichtmetallischen Schutzschicht 4 aus einem absorptionsarmen Material. Die Zwischenschicht 2 aus einem Lack ist in einem kontinuierlichen Verfahren aufgebracht.

Der bandförmige Träger 1 kann aus Aluminium, Magnesium, Kupfer, Titan, Molybdän, Tantal oder Stahl, wie beispielsweise Edelstahl, oder aus Legierungen mit diesen Stoffen, wie beispielsweise Messing, bestehen.

Insbesondere kann eine solche Dimensionierung der einzelnen Schichten erfolgen, daß das erfindungsgemäße Verbundmaterial als Coil mit einer Breite bis zu 1600 mm und mit einer Dicke von etwa 0,1 bis 1,5 mm ausgebildet ist. Insbesondere kann der Träger 1 vorzugsweise eine Dicke D₁ von etwa 0,1 bis 0,7 mm, besitzen.

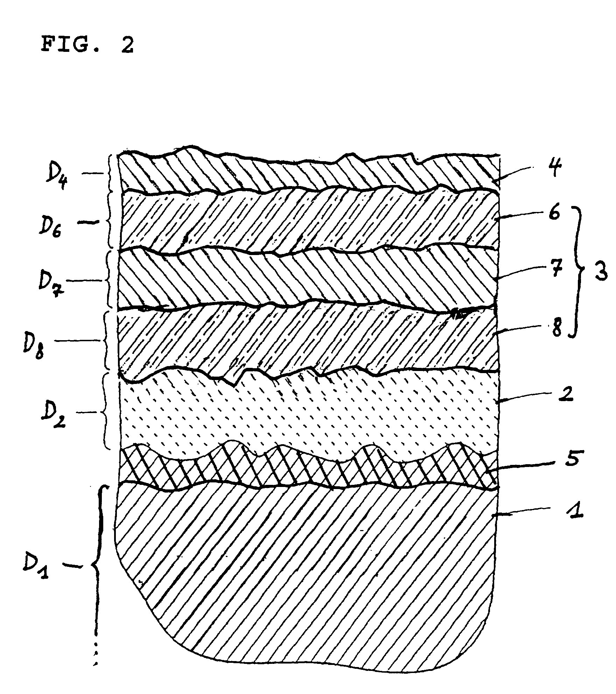

Auf dem Träger 1 kann - wie im vierten Ausführungsbeispiel (Fig. 2) exemplarisch gezeigt - unter der Zwischenschicht 2 eine durch Chromatieren, Phosphatieren, Anodisieren, Verzinken o.ä. hergestellte haftungsfördernde Interfaceschicht 5 aufgebracht sein. Auch kann es zweckmäßig sein, den Träger 1 vor dem Lackauftrag zur Reinigung, insbesondere zur Entfettung, naß- und/oder plasmachemisch vorzubehandeln.

Auf dem Träger 1 ist eine aus einem Lack bestehende Zwischenschicht 2 aufgebracht. Der Lack der Zwischenschicht 2 kann dabei ein auf der Basis von einem oder mehreren Monomeren hergestelltes Polykondensat, Polyaddukt oder, insbesondere durch eine radikalische Polymerisation hergestelltes, Polymerisat sein. Insbesondere ist es - wie bereits erwähnt - von Vorteil, wenn der Lack der Zwischenschicht 2 vakuumtauglich ist, d.h. eine Glastemperatur von über 100 °C und eine Ausgasrate von weniger als 10⁻⁴ mbar l s⁻¹ m⁻² besitzt.

Im Hinblick auf einen kontinierlichen Auftrag der Zwischenschicht 2 können mit Vorteil nach dem Coil Coating-Verfahren verarbeitbare Lacke auf der Basis von Acryl-, Epoxid-, Phenol-, Melamin-, Harnstoff- oder Polyurethanharz Verwendung finden, die insbesondere bei Temperaturen von bis zu etwa 250 °C härtbar sind und deren Viskosität sich durch geeignete Lösungsmittel einstellen läßt.

Die Aushärtung des Lackes kann dabei auf unterschiedliche Weise erfolgen:
- durch mehrstufiges Härten mit UV-Strahlung aus Lampen oder Lasern und/oder Elektronenstrahlen,
- durch Härten mit UV-Strahlung aus Lampen oder Lasern und Heißluft,
- durch Härten mit UV-Strahlung aus Lampen oder Lasern und IR-Strahlung,
- durch Härten mit UV-Strahlung aus Lampen oder Lasern und IR-Strahlung aus Lasern, gegebenenfalls in Kombination mit Heißluft.

Die Dicke D₂ der Zwischenschicht 2 kann vorteilhafterweise an die Rauhigkeit des Trägers 1 angepaßt werden, wobei Werte im Bereich von etwa 2 bis 20 µm charakteristisch sind.

Auf der Zwischenschicht 2 befindet sich das optische Mehrschichtsystem 3, das in allen Ausführungen der Erfindung im kontinuierlichen Vakuum-Bandbeschichtungsprozeß auf der Zwischenschicht 2 aufgebracht ist. Ebenfalls in allen Ausführungen besteht das optische Mehrschichtsystem 3 aus drei Schichten, wobei die beiden oberen Schichten 6, 7 dielektrische Schichten sind und die unterste Schicht 8 eine auf die Zwischenschicht 2 aufgetragene metallische, insbesondere aus Aluminium bestehende, Schicht ist. Letztere kann mit Vorteil durch Sputtern oder durch Verdampfen, insbesondere durch Elektronenbombardement oder aus thermischen Quellen, erzeugt werden.

Das Material der beiden oberen Schichten 6, 7 des optischen Mehrschichtsystems 3 kann chemisch der Gruppe der Metalloxide, -nitride, -carbide, -fluoride oder -sulfide zugehörig sein, wobei die beiden oberen Schichten 6, 7 unterschiedliche Brechungsindizes aufweisen sollten. Auch die beiden oberen Schichten 6, 7 des optischen Mehrschichtsystems 3 können - wie die unterste Schicht 8 - Sputterschichten, insbesondere durch Reaktivsputtern erzeugte Schichten, sein oder durch Verdampfen, insbesondere durch Elektronenbombardement oder aus thermischen Quellen, erzeugt werden. Außerdem können CVD- oder PECVD-Auftragungsverfahren für die Schichtbildung zur Anwendung kommen. Derartige Auftragsverfahren zeichnen sich durch geringe erzielbare Schichtdickentoleranzen aus; und zwar überschreiten diese nicht Abweichungen im Bereich von etwa ± 5 %.

Die auf das optische Mehrschichtsystem aufgetragene Schutzschicht 4 besteht in allen Ausführungsbeispielen aus einem niedrigbrechenden dielektrischen Material, insbesondere aus SiO₂. Die Schutzschicht 4 besitzt eine Dicke D₄ von 5 bis 20 nm, vorzugsweise von 5 bis 10 nm, und kann in einem kontinuierlichen Vakuum-Bandbeschichtungsprozeß auf dem optischen Mehrschichtsystem 3 aufgebracht sein.

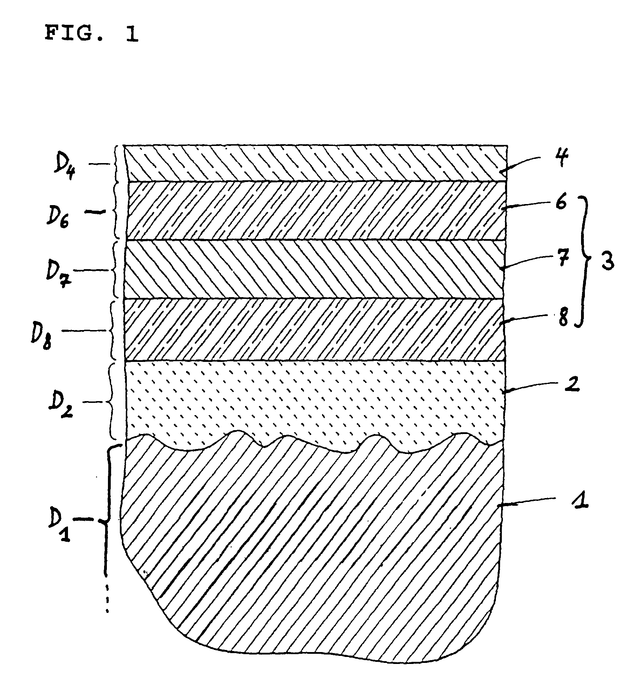

Wie Fig. 1 zu entnehmen ist, ist die Zwischenschicht 2 in den ersten drei Ausführungsbeispielen eben ausgebildet. Der arithmetische Mittenrauhwert Rₐ der Schichtoberfläche liegt dabei im Bereich von etwa 1 bis 100 nm.

Die erste Ausführung betrifft ein Reflektormaterial für sichtbares Licht, bei dem insbesondere ein nach DIN 5036 bestimmter Licht-Gesamtreflexionsgrad mindestens 95 % und ein diffuser Licht-Reflexionsgrad höchstens 4 % beträgt. Die unterste Schicht 8 des optischen Mehrschichtsystems 3 besteht aus Aluminium und ihre Dicke D₈ ist so bemessen, daß die Transmission durch die Schicht 8 bei der Zentralwellenlänge des Reflexionsbandes weniger als 0,5 % beträgt. Diese Dicke D₈ liegt etwa bei 60 nm. Die darüberliegende Schicht 7 ist eine niedrigbrechende, aus SiO₂ bestehende Schicht mit einer Dicke D₇ von etwa 90 nm, während die darüberliegende oberste Schicht 6 des optischen Mehrschichtsystems 3 einen vergleichsweise hohen Brechungsindex besitzt, aus TiO₂ besteht und eine Dicke D₆ von etwa 60 nm aufweist. Beide Schichten 6, 7 sind absorptionsarm. Die jeweiligen optischen Dicken D₆, D₇ der beiden oberen Schichten 6, 7 sind so bemessen, daß sie etwa einem Viertel der Vakuumwellenlänge des spektralen Zentrums des gewünschten optischen Reflexionsbandes entsprechen. Dadurch wirkt das komplette Schichtsystem 3 nahezu farbneutral. Die beiden Schichten 6, 7 werden werkstofftechnisch insbesondere derart ausgewählt, daß eine möglichst große Differenz der Brechungsindizes vorhanden ist. Die Schutzschicht 4 besitzt eine Dicke D₄ von etwa 10 nm.

Die zweite Ausführung betrifft ein Reflektormaterial für ultraviolettes Licht, bei dem ebenfalls insbesondere ein in Analogie zu DIN 5036 bestimmter Gesamtreflexionsgrad mindestens 95 % und ein diffuser Reflexionsgrad höchstens 10 % % beträgt. Das Verbundmaterial unterscheidet sich vom ersten Ausführungsbeispiel durch die in der obersten Schicht 6 des optischen Mehrschichtsystems 3 verwendeten hochbrechenden Materialien. Anstelle von TiO₂ können hier mit Vorteil ZrO₂, HfO₂ mit einer optimalen Schichtdicke D₆ von etwa 40 nm oder Al₂O₃ mit einer optimalen Schichtdicke D₆ von etwa 45 nm eingesetzt werden, wobei mit ZrO₂ die kurzwellige Anwendungsgrenze bei etwa 240 nm, mit HfO₂ bei etwa 200 nm und mit Al₂O₃ bei etwa 200 nm liegt. Die darunterliegende niedrigbrechende, aus SiO₂ bestehende Schicht besitzt vorteilhafterweise eine Dicke D₇ von etwa 50 nm, während die unterste, aus Aluminium bestehende Schicht 8 des optischen Mehrschichtsystems 3 eine Dicke D₈ von etwa 90 nm aufweist. Die Schutzschicht 4 aus SiO₂ besitzt eine Dicke D₄ von etwa 6 nm.

Gemäß einer dritten Ausführung der Erfindung kann ein erfindungsgemäßes Verbundmaterial, wie es in Fig. 1 dargestellt ist, auch mit einem derartigen optische Mehrschichtsystem 3 versehen sein, daß gemäß DIN 5036 ein hoher Absorptionsgrad erzielt wird. Die untere metallische Schicht 8 auf der Lackoberfläche mit hoher Extinktion sowie die darüber liegenden reflexmindernden dielektrischen Schichten 6, 7 können im kontinuierlichen Vakuum-Bandbeschichtungsprozeß aufgebracht werden. Die Schichten 6, 7, 8 können in diesem Fall so ausgewählt werden, daß sie eine hohe Gesamt-Extinktion bewirken. Eine nach DIN 58196 bestimmte mechanische Belastbarkeit der Oberfläche des Verbundmaterials ist - wie sowohl bei den beiden ersten Ausführungen als auch bei der vierten Ausführung - besser als H 50 - 1.

Bei dem in Fig. 2 dargestellten vierten Ausführungsbeispiel der Erfindung weist die Zwischenschicht 2 eine wellige bzw. rauhe Oberfläche auf. Der arithmetische Mittenrauhwert Rₐ der Schichtoberfläche liegt dabei im Bereich von etwa 0,1 bis 5 µm. Diese Struktur kann direkt durch den Aushärtungsprözeß oder durch eine bei oder nach dem Aushärten des Lackes, gegebenenfalls mit zusätzlichem Energieeintrag erfolgende mechanische Bearbeitung gebildet sein. Der Energieeintrag kann dabei durch die oben beschriebenen Möglichkeiten zur Aushärtung des Lackes, wie einoder mehrstufiges, gegebenenfalls kombiniertes Härten mit UV-Strahlung, Elektronenstrahlen, Heißluft und/oder IR-Strahlung erfolgen. Ein so aufgebautes erfindungsgemäßes Verbundmaterial weist einen nach DIN 5036 bestimmten, diffusen Licht-Reflexionsgrad auf, der im Bereich von 4 bis etwa 95 % liegt.

Durch die mögliche Verwendung eines Lackes zur Herstellung der Zwischenschicht 2 ist ein hoher Korrosionsschutz des Trägers 1 gegeben, wobei mit dem Lack gleichzeitig eine hohe Oberflächenhärte und Kratzfestigkeit, zumindest entsprechend den Oberflächeneigenschaften einer Eloxalschicht, erreicht werden kann. Eine aus Lack bestehende Zwischenschicht 2 besitzt darüber hinaus eine hohe Flexibilität, so daß große mechanische Verformungen an dem erfindungsgemäßen Verbundmaterial vorgenommen werden können, ohne daß es zu einer Rißbildung, insbesondere zu einer Mikrorißbildung, kommt. So wurden bei allen vier beschriebenen Ausführungsbeispielen derartige Lacke verwendet, die eine solche Biegehaftung auf dem Träger 1 aufwiesen, daß beim Dornbiegetest bei einer Materialstärke des Trägers 1 von 0,4 mm und Biegung um einen Dorn mit 2 mm Durchmesser bei Abzug eines vorher aufgeklebten mitgebogenen Klebestreifens vom Typ Scotch 670 CFM des Herstellers 3 M keine Delamination der Zwischenschicht 2 auftrat. Die erfindungsgemäße Beschichtung ist wischfest und widersteht den Beanspruchungen der Weiterverarbeiter im Leuchtenbau, insbesondere bei den vorzunehmenden Formgebungsprozessen, problemlos.

Die vorliegende Erfindung ist nicht auf die dargestellten Ausführungsbeispiele beschränkt, sondern umfaßt alle im Sinne der Erfindung gleichwirkenden Mittel und Maßnahmen. Beispielsweise muß die erfindungsgemäße Schutzschicht 4 nicht aus SiO₂ bestehen. Als Werkstoffe kommen hier Materialien aus den gleichen chemischen Stoffgruppen in Frage, wie sie auch für die beiden oberen Schichten 6, 7 des optischen Mehrschichtsystems 3 einsetzbar sind. Es sei insbesondere weiterhin darauf hingewiesen, daß die erfindungsgemäße Zwischenschicht 2 nicht zwangsläufig transparent sein muß, sondern beispielsweise auch farbig sein kann, da von ihr die spektralen Eigenschaften des reflektierten Lichtes unabhängig sind. Es kann ein handelsüblicher Standard-Industrielack eingesetzt werden. Vorteilhaft ist an dem erfindungsgemäßen Verbundmaterial auch, daß seine Materialkanten korrosionsgeschützt sind.

### Bezugszeichen

- 1: Träger
- 2: Zwischenschicht
- 3: optisches Mehrschichtsystem
- 4: Schutzschicht
- 5: Interfacschicht
- 6: obere Schicht von 3
- 7: mittlere Schicht von 3
- 8: untere Schicht von 3

- D₁: Dicke von 1
- D₂: Dicke von 2
- D₄: Dicke von 4
- D₆: Dicke von 6
- D₇: Dicke von 7
- D₈: Dicke von 8
- Rₐ: arithmetischer Mittenrauhwert

## Patentansprüche

1. Reflektierendes Verbundmaterial, insbesondere für Reflektoren, mit einem bandförmigen metallischen Träger (1), einer Zwischenschicht und mit einem auf die Zwischenschicht (2) aufgebrachten, reflektierenden optischen Mehrschichtsystem (3),
**dadurch gekennzeichnet, daß** auf dem optischen Mehrschichtsystem (3) eine nichtmetallische Schutzschicht (4) aufgebracht ist, die aus einem derart absorptionsarmen Material besteht, daß sie einen nach DIN 5036 bestimmten Licht-Gesamtreflexionsgrad von mindestens 95 % zuläßt, und die eine Dicke (D₄) von 5 bis 20 nm, vorzugsweise von 5 bis 10 nm, aufweist und daß die Zwischenschicht (2) eine Dicke (D₂) im Bereich von etwa 2 bis 20 µm aufweist und aus einem Lack besteht, der ein auf der Basis von einem oder mehreren Monomeren hergestelltes Polykondensat, ein Polyaddukt oder ein, insbesondere durch eine radikalische Polymerisation hergestelltes, Polymerisat ist.

2. Verbundmaterial nach Anspruch 1,
**dadurch gekennzeichnet, daß** der Lack nach dem Coil Coating-Verfahren verarbeitbar ist, d.h. insbesondere ein bei Temperaturen bis zu etwa 250 °C härtbarer Einbrennlack mit voreinstellbarer Zähigkeit auf der Basis von Acryl-, Epoxid-, Phenol-, Melamin-, Harnstoff- oder Polyurethanharz ist.

3. Verbundmaterial nach Anspruch 1 oder 2,
**dadurch gekennzeichnet, daß** der Lack der Zwischenschicht (2) derart auf den insbesondere vor dem Lackauftrag zur Reinigung, insbesondere zur Entfettung, naß- und/oder plasmachemisch vorbehandelten Träger (1) abgestimmt ausgewählt und unter Vernetzung vorhandener Doppelbindungen der Monomere ein- oder mehrstufig mit UVund/oder IR-Strahlung aus Lampen oder Lasern, mit Elektronenstrahlen und/oder mit Heißluft gehärtet ist, daß beim Dornbiegetest bei einer Materialstärke des Trägers (1) von 0,4 mm und Biegung um einen Dorn mit 2 mm Durchmesser bei Abzug eines vorher aufgeklebten mitgebogenen Klebestreifens vom Typ Scotch 670 CFM des Herstellers 3 M keine Delamination der Zwischenschicht (2) auftritt und/oder eine nach DIN 58196 bestimmte mechanische Belastbarkeit der Oberfläche besser ist als H 50 - 1.

4. Verbundmaterial nach einem der Ansprüche 1 bis 3,
**dadurch gekennzeichnet, daß** der Lack vakuumtauglich ist, d.h. eine Glastemperatur von über 100 °C und eine Ausgasrate von weniger als 10⁻⁴ mbar 1 s⁻¹ m⁻² besitzt.

5. Verbundmaterial nach einem der Ansprüche 1 bis 4,
**dadurch gekennzeichnet, daß** der Träger (1) aus Aluminium, Magnesium, Kupfer, Titan, Molybdän, Tantal oder Stahl, wie beispielsweise Edelstahl, oder aus Legierungen mit diesen Stoffen, wie beispielsweise Messing, besteht.

6. Verbundmaterial nach einem der Ansprüche 1 bis 5,
**dadurch gekennzeichnet, daß** auf dem Träger (1) unter der Zwischenschicht (2) eine durch Chromatieren, Phosphatieren, Anodisieren, Verzinken o.ä. hergestellte Interfaceschicht (5) aufgebracht ist.

7. Verbundmaterial nach einem der Ansprüche 1 bis 6,
**gekennzeichnet durch** eine Ausbildung als Coil mit einer Breite bis zu 1600 mm und mit einer Dicke von etwa 0,1 bis 1,5 mm.

8. Verbundmaterial nach einem der Ansprüche 1 bis 7,
**dadurch gekennzeichnet, daß** das optische Mehrschichtsystem (3) aus drei Schichten (6, 7, 8) besteht, wobei die beiden oberen Schichten (6, 7) dielektrische Schichten sind und die unterste Schicht (8) eine auf die Zwischenschicht (2) aufgetragene metallische, insbesondere aus Aluminium bestehende, Schicht ist.

9. Verbundmaterial nach Anspruch 8,
**dadurch gekennzeichnet, daß** die metallische Schicht des optischen Mehrschichtsystems (3) eine Sputterschicht oder eine durch Verdampfen, insbesondere durch Elektronenbombardement oder aus thermischen Quellen, erzeugte Schicht ist.

10. Verbundmaterial nach Anspruch 8 oder 9,
**dadurch gekennzeichnet, daß** das Material der beiden oberen Schichten (6, 7) des optischen Mehrschichtsystems (3) chemisch der Gruppe der Metalloxide, -nitride, -carbide, -fluoride oder -sulfide zugehörig ist und die beiden oberen Schichten (6, 7) unterschiedliche Brechungsindizes aufweisen.

11. Verbundmaterial nach einem der Ansprüche 8 bis 10,
**dadurch gekennzeichnet, daß** die oberste Schicht (6) des optischen Mehrschichtsystems (3) aus einem hochbrechenden Material, wie TiO₂, ZrO₂, HfO₂ oder Al₂O₃, und die darunterliegende Schicht (7) aus einem niedrigbrechenden Material, wie SiO₂, besteht.

12. Verbundmaterial nach einem der Ansprüche 8 bis 11,
**dadurch gekennzeichnet, daß** die beiden oberen Schichten (6, 7) des optischen Mehrschichtsystems (3) Sputterschichten, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten sind.

13. Verbundmaterial nach einem der Ansprüche 8 bis 12,
**dadurch gekennzeichnet, daß** die beiden oberen Schichten (6, 7) des optischen Mehrschichtsystems (3) derart absorptionsarm sind, daß sie einen nach DIN 5036 bestimmten Licht-Gesamtreflexionsgrad von mindestens 95 % zulassen.

14. Verbundmaterial nach einem der Ansprüche 1 bis 13,
**dadurch gekennzeichnet, daß** die Zwischenschicht (2) eben ist, d.h einen arithmetischen Mittenrauhwert (Rₐ) im Bereich von etwa 1 bis 100 nm aufweist, derart, daß ein nach DIN 5036 bestimmter diffuser Licht-Reflexionsgrad höchstens 4 % beträgt.

15. Verbundmaterial nach einem der Ansprüche 1 bis 13,
**dadurch gekennzeichnet, daß** die Zwischenschicht (2) eine wellige und/oder rauhe Oberfläche, d.h. einen arithmetischen Mittenrauhwert (Rₐ) im Bereich von etwa 0,1 bis 5 µm aufweist, derart, daß ein nach DIN 5036 bestimmter diffuser Licht-Reflexionsgrad im Bereich von 4 bis etwa 95 % liegt.

16. Verbundmaterial nach Anspruch 15,
**dadurch gekennzeichnet, daß** die wellige und/oder rauhe Oberfläche der Zwischenschicht (2) im Aushärtungsvorgang des Lackes gebildet ist.

17. Verbundmaterial nach Anspruch 15 oder 16,
**dadurch gekennzeichnet, daß** die wellige und/oder rauhe Oberfläche der Zwischenschicht (2) durch eine bei oder nach dem Aushärten des Lackes, gegebenenfalls mit zusätzlichem Energieeintrag erfolgende, mechanische Bearbeitung gebildet ist.

18. Verbundmaterial nach einem der Ansprüche 1 bis 17,
**dadurch gekennzeichnet, daß** die Schutzschicht (4) aus einem niedrigbrechenden dielektrischen Material, insbesondere aus SiO₂, besteht.

19. Verbundmaterial nach einem der Ansprüche 1 bis 18,
**dadurch gekennzeichnet, daß** die Schutzschicht (4) eine Sputterschicht, insbesondere eine durch Reaktivsputtern erzeugte Schicht, eine CVD- oder PECVD-Schicht oder eine durch Verdampfen, insbesondere durch Elektronenbombardement oder aus thermischen Quellen, erzeugte Schicht ist.

## Claims

1. Reflective composite material, in particular for reflectors, having a metallic support (1) in strip form, an intermediate layer and having a reflective multilayer optical system (3) which is applied to the intermediate layer (2), **characterized in that** a non-metallic protective layer (4), which consists of a low-absorption material in such a manner that it permits a total optical reflectivity determined according to DIN 5036 of at least 95%, and has a thickness (D₄) of from 5 to 20 nm, preferably from 5 to 10 nm, is applied to the multilayer optical system (3), and **in that** the thickness (D₂) of the intermediate layer (2) is in the range from about 2 to 20 µm and the intermediate layer comprises a coating material which is a polycondensate produced on the basis of one or more monomers, a polyadduct or a polymer produced in particular by free-radical polymerization.

2. Composite material according to Claim 1, **characterized in that** the coating material can be processed using the coil-coating method, i.e. is in particular a stoving enamel with a pre-settable toughness which is based on acrylic resin, epoxy resin, phenolic resin, melamin resin, urea resin or polyurethane resin and can be cured at temperatures of up to about 250°C.

3. Composite material according to Claim 1 or 2, **characterized in that** the coating material of the intermediate layer (2) is selected so as to match the support (1), which has been pretreated by wet-chemical and/or plasma-chemical means for cleaning, in particular degreasing purposes, in particular prior to the application of the coating material, and is cured in one or more stages using UV and/or IR radiation from lamps or lasers, using electron beams and/or using hot air, so that double bonds of the monomers which are present are crosslinked, **in that** there is no delamination of the intermediate layer (2) in the mandrel flex test with a material thickness of the support (1) of 0.4 mm and bending around a mandrel with a diameter of 2 mm, when an adhesive strip of type Scotch 670 CFM, produced by 3 M, which has previously been stuck on and is also bent around the mandrel, is pulled off, and/or a mechanical load-bearing capacity of the surface, determined according to DIN 58196, is better than H 50 - 1.

4. Composite material according to one of Claims 1 to 3, **characterized in that** the coating material is suitable for a vacuum, i.e. has a glass transition temperature of over 100°C and a gas release rate of less than 10⁻⁴ mbar 1 s⁻¹ m⁻².

5. Composite material according to one of Claims 1 to 4, **characterized in that** the support (1) consists of aluminium, magnesium, copper, titanium, molybdenum, tantalum or steel, such as for example stainless steel, or of alloys containing these substances, such as for example brass.

6. Composite material according to one of Claims 1 to 5, **characterized in that** an interface layer (5), which is produced by chromating, phosphating, anodizing, galvanizing or the like, is applied to the support (1) below the intermediate layer (2).

7. Composite material according to one of Claims 1 to 6, **characterized by** being in the form of a coil with a width of up to 1600 mm and a thickness of approximately 0.1 to 1.5 mm.

8. Composite material according to one of Claims 1 to 7, **characterized in that** the multilayer optical system (3) comprises three layers (6, 7, 8), the two upper layers (6, 7) being dielectric layers and the bottom layer (8) being a metallic, in particular aluminium, layer which has been applied to the intermediate layer (2).

9. Composite material according to Claim 8, **characterized in that** the metallic layer of the multilayer optical system (3) is a sputtered layer or a layer which has been produced by vaporization, in particular by electron bombardment or from thermal sources.

10. Composite material according to one of Claims 8 or 9, **characterized in that** the material of the two upper layers (6, 7) of the multilayer optical system (3) in chemical terms belongs to the group consisting of the metal oxides, metal nitrides, metal carbides, metal fluorides or metal sulphides, and the two upper layers (6, 7) have different refractive indices.

11. Composite material according to one of Claims 8 to 10, **characterized in that** the top layer (6) of the multilayer optical system (3) consists of a material with a high refractive index, such as TiO₂, ZrO₂, HfO₂ or Al₂O₃, and the layer (7) beneath it consists of a material with a low refractive index, such as SiO₂.

12. Composite material according to one of Claims 8 to 11, **characterized in that** the two upper layers (6, 7) of the multilayer optical system (3) are sputtered layers, in particular layers produced by reactive sputtering, CVD or PECVD layers, or layers which are produced by vaporization, in particular by electron bombardment or from thermal sources.

13. Composite material according to one of Claims 8 to 12, **characterized in that** the two upper layers (6, 7) of the multilayer optical system (3) exhibit low absorption in such a manner that they permit a total optical reflectivity determined according to DIN 5036 of at least 95%.

14. Composite material according to one of Claims 1 to 13, **characterized in that** the intermediate layer (2) is planar, i.e. has an arithmetic roughness average (Rₐ) in the range from about 1 to 100 nm in such a manner that a diffuse optical reflectivity determined according to DIN 5036 is at most 4%.

15. Composite material according to one of Claims 1 to 13, **characterized in that** the intermediate layer (2) has an undulating and/or rough surface, i.e. has an arithmetic roughness average (Rₐ) in the range from about 0.1 to 5 µm, in such a manner that a diffuse optical reflectivity determined according to DIN 5036 lies in the range from 4 to about 95%.

16. Composite material according to Claim 15, **characterized in that** the undulating and/or rough surface of the intermediate layer (2) is formed during the operation of curing the coating material.

17. Composite material according to Claim 15 or 16, **characterized in that** the undulating and/or rough surface of the intermediate layer (2) is formed by a mechanical treatment which takes place during or after curing of the coating material, if appropriate with the introduction of additional energy.

18. Composite material according to one of Claims 1 to 17, **characterized in that** the protective layer (4) consists of a dielectric material with a low refractive index, in particular of SiO₂.

19. Composite material according to one of Claims 1 to 18, **characterized in that** the protective layer (4) is a sputtered layer, in particular a layer produced by reactive sputtering, a CVD or PECVD layer or a layer which is produced by vaporization, in particular by electron bombardment or from thermal sources.

## Revendications

1. Matériau composite réfléchissant, en particulier pour réflecteurs, comportant un support métallique (1) en forme de bande, une couche intermédiaire et un système multicouche optique (3), réfléchissant et appliqué sur la couche intermédiaire (2), **caractérisé en ce que** sur le système multicouche optique (3) est appliquée une couche de protection non métallique (4) qui est constituée d'un matériau, présentant une faible absorption au point qu'elle autorise un facteur de réflexion totale de la lumière, déterminé selon DIN 5036, d'au moins 95 %, et qui a une épaisseur (D₄) de 5 à 20 nm, de préférence de 5 à 10 nm, et **en ce que** la couche intermédiaire (2) a une épaisseur (D₂) comprise entre environ 2 et 20 µm et est constituée d'un vernis qui est un produit de polycondensation préparé à base d'un ou plusieurs monomères, un produit de polyaddition, ou un polymère, fabriqué en particulier par polymérisation radicalaire.

2. Matériau composite selon la revendication 1, **caractérisé en ce que** le vernis peut être mis en oeuvre par le procédé de laquage en bande, c'est-à-dire en particulier un vernis au four pouvant durcir à des températures allant jusqu'à environ 250°C, ayant une viscosité pouvant être ajustée au préalable, à base d'une résine acrylique, époxyde, phénolique, de mélamine, d'urée ou de polyuréthanne.

3. Matériau composite selon la revendication 1 ou 2, **caractérisé en ce que** le vernis de la couche intermédiaire (2) est choisi en étant adapté au support (1), qui en particulier avant l'application du vernis, a subi pour assurer un nettoyage, en particulier un dégraissage, un traitement chimique préalable par voie humide et/ou par plasma, et, par utilisation des doubles liaisons présentes des monomères, est durci en une ou plusieurs étapes à l'aide d'un rayonnement UV et/ou IR provenant de lampes ou de lasers, avec des rayons d'électrons et/ou à l'aide d'air chaud, de telle sorte que, dans l'essai de pliage sur mandrin, pour une épaisseur de support (1) de 0,4 mm, le pliage étant effectué autour d'un mandrin de 2mm de diamètre, le pelage d'un ruban adhésif de type scotch 670 CFM du fabricant 3M, appliqué par collage au préalable et lui aussi soumis au pliage, ne produise aucun délaminage de la couche intermédiaire (2), ou encore que la capacité de charge mécanique de la surface, déterminée selon DIN 58196, soit meilleure que H50-1.

4. Matériau composite selon l'une des revendications 1 à 3, **caractérisé en ce que** le vernis est utilisable sous vide, c'est-à-dire qu'il a une température de transition vitreuse supérieure à 100°C et un taux de dégazage inférieur à 10⁻ ⁴ mbar.l .s⁻¹.m⁻².

5. Matériau composite selon l'une des revendications 1 à 4, **caractérisé en ce que** le support (1) est constitué d'aluminium, de magnésium, de cuivre, de titane, de molybdène, de tantale ou d'acier, tel par exemple que l'acier inoxydable, ou d'alliages avec ces composants, par exemple le laiton.

6. Matériau composite selon l'une des revendications 1 à 5, **caractérisé en ce qu'**on a appliqué sur le support 1 en dessous de la couche intermédiaire (2), une couche d'interface (5), réalisée par chromatation, phosphatation, anodisation, étamage etc.

7. Matériau composite selon l'une des revendications 1 à 6 **caractérisé par** une forme de réalisation sous forme d'une bande continue ayant une largeur allant jusqu'à 1600 mm et une épaisseur d'environ 0,1 à 1,5 mm.

8. Matériau composite selon l'une des revendications 1 à 7 **caractérisé en ce que** le système multicouche optique (3) est constitué de 3 couches (6, 7, 8), les deux couches supérieures (6, 7) étant des couches diélectriques, et la couche inférieure (8) étant une couche métallique, constituée en particulier d'aluminium, appliquée sur la couche intermédiaire (2).

9. Matériau composite selon la revendication 8, **caractérisé en ce que** la couche métallique du système multicouche optique (3) est une couche obtenue par pulvérisation cathodique ou une couche produite par évaporation, en particulier par bombardement d'électrons, ou à partir de sources de chaleur.

10. Matériau composite selon la revendications 8 ou 9, **caractérisé en ce que** le matériau des deux couches supérieures (6, 7) du système multicouche optique (3) appartient du point de vue chimique au groupe des oxydes, nitrures, carbures, fluorures ou sulfures métalliques, et les deux couches supérieures (6, 7) ont des indices de réfraction différents.

11. Matériau composite selon l'une des revendications 8 à 10, **caractérisé en ce que** la couche supérieure (6) du système multicouche optique (3) est constituée d'un matériau à grand indice de réfraction, tel que TiO₂, ZrO₂, HfO₂ ou Al₂O₃, et la couche (7) située en dessous est constituée d'un matériau à faible indice de réfraction, tel que SiO₂.

12. Matériau composite selon l'une des revendications 8 à 11, **caractérisé en ce que** les deux couches supérieures (6, 7) du système multicouche optique sont des couches obtenues par pulvérisation cathodique, en particulier des couches obtenues par pulvérisation réactive, des couches obtenues par CVD ou PECVD ou des couches produites par évaporation, en particulier par bombardement d'électrons ou à partir de sources de chaleur.

13. Matériau composite selon l'une des revendications 8 à 12, **caractérisé en ce que** les deux couches supérieures (6, 7) du système multicouche optique (3) présentent une faible absorption, au point qu'elles autorisent un facteur de réflexion totale de la lumière, déterminé selon DIN 5036, d'au moins 95 %.

14. Matériau composite selon l'une des revendications 1 à 13, **caractérisé en ce que** la couche intermédiaire (2) est plane, c'est-à-dire présente une rugosité moyenne arithmétique (Rₐ) d'environ 1 à 100 nm, de telle sorte que l'on ait un facteur de réflexion de la lumière diffuse, déterminé, 5036, d'au plus 4 %.

15. Matériau composite selon l'une des revendications 1 à 13, **caractérisé en ce que** la couche intermédiaire (2) est une surface ondulée et/ou rugueuse, c'est-à-dire présente une rugosité moyenne arithmétique (Rₐ) comprise entre environ 0,1 et 5 µm, de telle sorte que l'on ait un facteur de réflexion de la lumière diffuse, déterminé selon DIN 5036, compris entre 4 et environ 95 %.

16. Matériau composite selon la revendications 15, **caractérisé en ce que** la surface ondulée et/ou rugueuse de la couche intermédiaire (2) est formée lors du durcissement du vernis.

17. Matériau composite selon la revendications 15 ou 16, **caractérisé en ce que** la surface ondulée et/ou rugueuse de la couche intermédiaire (2) est formée par un traitement mécanique, réalisé lors du durcissement du vernis ou après ce durcissement, éventuellement moyennant un apport supplémentaire d'énergie.

18. Matériau composite selon l'une des revendications 1 à 17, **caractérisé en ce que** la couche de protection (4) est constituée d'un matériau diélectrique à faible indice de réfraction, en particulier de SiO₂.

19. Matériau composite selon l'une des revendications 1 à 18, **caractérisé en ce que** la couche de protection (4) est une couche obtenue par pulvérisation cathodique, en particulier une couche obtenue par pulvérisation réactive, une couche obtenue par CVD ou PECVD, ou une couche produite par évaporation, en particulier par bombardement d'électrons ou à partir d'une source de chaleur.
